# EUROPEAN PATENT SPECIFICATION

(11) **EP 1 339 475 B1**
(45) Date of publication and mention of the grant of the patent: **11.10.2006**
(21) Application number: 01999413.6
(22) Date of filing: 15.11.2001
(51) Int. Cl.: B01D 35/30, B01D 65/00, B01D 61/10, B29C 57/02, B29B 13/02

(54) **FILTER DEVICE**
FILTERVORRICHTUNG
DISPOSITIF DE FILTRATION

(30) Priority: 04.12.2000 NL 1016793
(43) Date of publication of application: 03.09.2003
(73) Proprietor: Vasse, Simon Roelof, 7772 AM Hardenberg (NL); Colijn, Albert, 9203 KW Drachten (NL)
(72) Inventor: Vasse, Simon Roelof, 7772 AM Hardenberg (NL); Colijn, Albert, 9203 KW Drachten (NL)
(74) Representative: 't Jong, Bastiaan Jacobus
(86) International application number: PCT/NL2001/000829
(87) International publication number: WO 2002/045817

(56) References cited:
- EP-A- 0 852 308
- EP-A- 1 041 334
- WO-A-00/60271
- WO-A-99/11361
- DE-A- 3 639 932
- FR-A- 1 390 498
- US-A- 3 847 694
- US-A- 3 887 992
- US-A- 4 135 961
- US-A- 4 258 935
- US-A- 5 595 651
- US-A- 5 720 411
- "Webster's Third New International Dictionary" 1986, MERRIAM-WEBSTER INC , SPRINGFIELD, MASSACHUSETS, USA * page 301 * * page 302 * * page 1721 * * page 2141 * * page 2459 *

## Description

The invention relates to a filter device for instance for modular filter elements, such as replaceable reverse osmosis filter elements.

Known filter housings for example known from DE-A-36 39 932 for reverse osmosis filter elements consist of a fibre impregnated with a synthetic resin. In order to manufacture such a housing a fibre is wound round a mandrel and then impregnated with a synthetic resin. The drawback of such a housing is that the length is limited by the maximum length of the winding mandrel and the costs of such a fibre tube are particularly high as a result of the production process.

A PVC filter housing has recently also been available on the market, wherein on the end of the housing a peripheral groove is arranged in the wall of the housing. This takes place by means of a machining operation. The integrity of the synthetic wall is hereby affected and it is therefore necessary to arrange a strengthening bush on the outside. In order to ensure sufficient transmission of force through this strengthening bush, this bush must extend over a considerable length on both sides of the groove. This length is determined by, among other factors, the adhesive force of the bush on the outer wall of the housing. The drawback of such a housing is that additional material is required because of the strengthening bush, that a machining operation must be performed in the housing and that, owing to the length of the strengthening bush, the housing is extra-long whereby additional build-in length is required.

US 5 595 651 A discloses a filter, including (i) a filter housing, comprising an extruded tube and a bush (sleeve) arranged on the outside of the housing; (ii) a filter element arranged in the housing; and (iii) a peripheral groove arranged in the bush, and a locking ring placed in said groove for locking the filter element in the housing.

EP-A-1 041 334, US-A-4 258 935 and US-A-4 135 961 all describe tubes or pipes with an expanded end. EP-A-1 041 334 discloses a bush which is arranged in the expanded end, while US-A-4 258 935 discloses an insert in the expanded end, while the non-expanded part of a subsequent tube is inserted in the expanded end of the device disclosed in US-A-4 135 961.

It is the object of the invention to obviate the above stated drawbacks.

This object is achieved with a filter device according to claim 1.

The advantage of the filter housing of the filter device according to the invention is that the wall of the extruded tube is not damaged by machining operations, whereby the housing wall retains its full strength. The bush arranged in the expanded end enables the forming of a groove in which a locking ring can be arranged in order to thus enclose the filter elements in the housing.

Another advantage of the bush is that it can be made from a material, for instance PET, other than the filter housing. A material can thus be chosen which is better suited for the part in which the groove is arranged.

Extruded tube is readily obtainable at a relatively low price and in different pressure classes, while it has sufficient strength to withstand the pressures. In addition, the length of an extrusion tube is unlimited in terms of the production process.

In a preferred embodiment according to the invention the inner wall of the bush lies substantially in the line of the non-expanded inner wall of the extruded tube. Thus is achieved that the filter elements can be placed inside the housing with an unobstructed passage.

The groove can be arranged for instance by machining and, because the expanded end is arranged round the bush, the strength of the wall of the housing is retained.

The tube of the filter housing according to the invention can comprise polyvinyl chloride, polyethylene or polypropylene, or another thermoplastic.

The bush can comprise for example a thermoplastic or a metal, such as aluminum.

The invention further comprises a method for manufacturing a filter device according to the invention, which method is claimed in claim 4.

Heating an end of the extruded tube and expanding the end is also designated as flaring. The expanded end of the tube is then designated as a flare.

In a preferred embodiment according to the method, arranging of the bush takes place by glueing.

Applicant assumes that when the filter housing is placed under pressure, whereby an axial force is exerted on the outer end of the filter housing, the expanded end will tend to shrink in diameter. This would correspond with a cylinder of a fabric which can be expanded by exerting a radial force but which will tend to shrink in diameter through applying of an axial force. The connecting parts are hereby clamped fixedly in the flare. In addition, it is assumed that the wall is strengthened by biaxial orientation.

The invention also relates to a modular filter system according to claim 7.

These and other features of the invention are further elucidated with reference to the annexed drawings.
Figure 1 shows a perspective view of a filter housing of the filter device according to the invention;
Figure 2 shows a cross-sectional view along line II-II in figure 1;
Figures 3-5 show cross-sectional views of embodiments according to the invention.

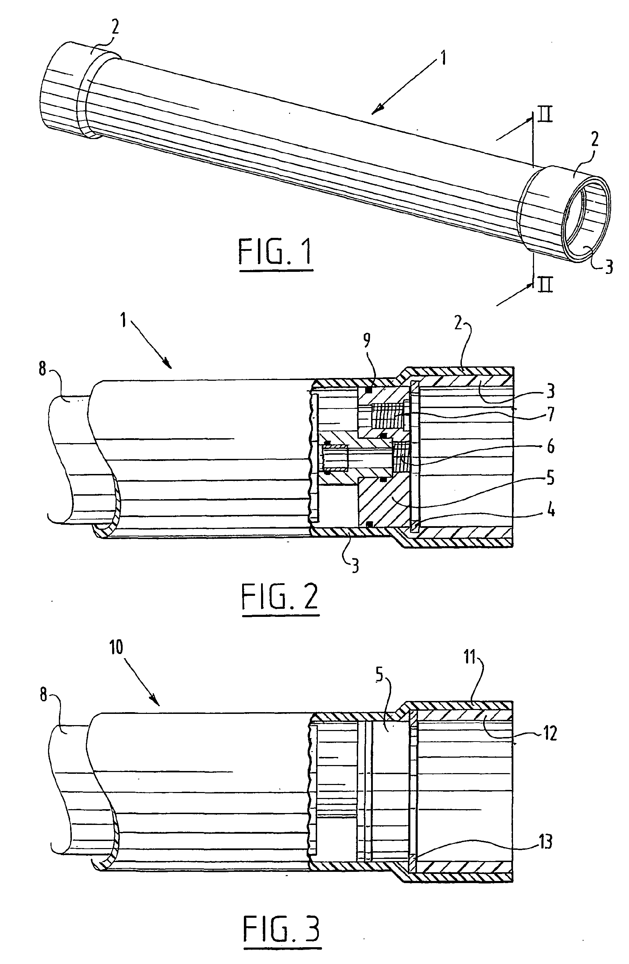

Figure 1 shows a filter housing 1 which has an expanded end 2 on each end. A bush 3 is glued into the extruded end 2.

Figure 2 shows a cross-sectional view of an end 2 of filter housing 1 according to figure 1. The wall of the tube is expanded at the position of outer end 2. Bush 3 is arranged herein. In this bush is arranged a groove in which a locking ring 4 is placed. This locking ring 4 locks a connecting part 5 on which are placed connections 6 and 7 for filter elements 8. Connecting part 5 is sealed by means of an O-ring 9 on the inner wall of filter housing 1.

In figure 3 is shown a second embodiment of a filter housing 10 according to the invention. Once again placed herein is a filter element 8 which is connected to a connecting piece 5. In the expanded end 11 is placed a bush 12, the length of which is smaller than the length of expanded part 11. This creates a space in which a locking ring 13 can be placed. The advantage hereof is that a machining operation is no longer necessary in order to arrange a groove in the bush. Locking ring 13 moreover supports on the maximum surface area of bush 12.

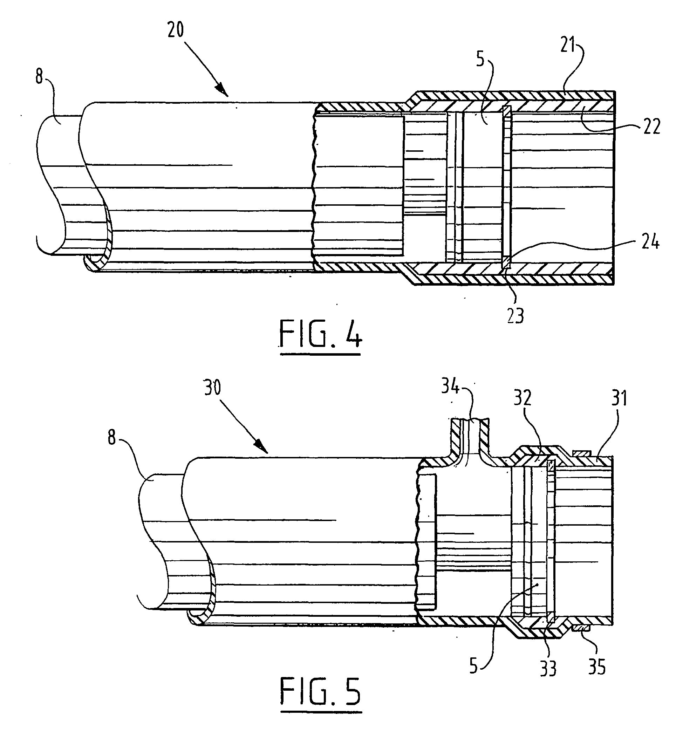

Figure 4 shows a third embodiment of a filter housing 20 according to the invention. A filter element 8 and a connecting part 5 are once again placed herein. The bush 22 placed in the expanded end 21 has a groove 23 roughly in the centre thereof in which a locking ring 24 is placed. When filter housing 20 comes under pressure, an axial force acts on bush 22. When bush 22 is glued into the expanded end 21, a shearing force will act on the contact surface between the expanded end 21 and bush 22. It will be possible to determine the size of this contact surface subject to the glue strength, the safety factors and the regulations relating to the pressure class. It can hereby be advantageous to arrange the groove roughly in the centre of bush 21.

In figure 5 is shown a fourth embodiment of a filter housing 30. In this embodiment a short bush 32 is placed in the expanded end 31, and a peripheral groove 33 is arranged in this bush. Beyond bush 32 the expanded end 33 is narrowed once again so that bush 32 is enclosed. An opening 34 on which a connection can be arranged is further arranged in the wall of the filter housing. When the end of filter housing 30 is heated, this opening 34 can be pressed in simple manner into the wall. A tensioning ring 35 providing extra strength is further arranged on the outermost end of filter housing 30.

Although in figure 1 a filter housing is shown wherein both ends are provided with an expanded end, it is also possible to provide the filter housings with one expanded end, thereby enabling mutual connection of a number of such filter housings. The bush is herein formed by the non-expanded outer end of the subsequent filter housing. A modular system thus results, whereby filter housings of any desired length can be manufactured.

It is moreover possible to embody the groove as a helical groove, whereby the locking ring is no longer necessary. The connecting piece can then be screwed into the bush.

Finally, the bush could be embodied as a segmented bush or a multi-layer bush. A segmented bush has its advantages during assembly and disassembly of a filter device according to the invention.

With a multi-layer bush, the surfaces of the bush could for example be adapted to their function. The outer surface could be made of a material, which could easily be glued to the tube, while the inner surface could be made of a material which can be machined easily.

## Claims

1. Filter device, including:
a) a filter housing (1, 10, 20, 30) comprising:
- an extruded tube with at least one expanded end (2, 11, 21, 31), and
- a bush (3, 12, 22, 32) arranged in the expanded end (2, 11, 21, 31);
b) at least a filter element (8) placed in the filter housing (1, 10, 20, 30); and
c) locking means for enclosing the filter element (8) in the housing (1, 10, 20, 30), wherein said locking means comprise:
- a peripheral groove (23, 33) arranged in the bush (3, 22, 32), or a peripheral groove formed by the space created between the wall of the expanded end (11) and a bush (12) placed in said expanded end (11) and having a length smaller than the length of said expanded part (11), and a locking ring (4, 13, 24) placed in said groove (23, 33), or
- a helical groove arranged in the bush (3, 12, 22, 32) for enclosing the filter element (8) by screwing.

2. Filter device as claimed in claim 1, wherein the inner wall of the bush (3, 12, 22, 32) lies substantially in the line of the non-expanded inner wall of the extruded tube.

3. Filter device as claimed in any of the foregoing claims, wherein at least the tube comprises polyvinyl chloride, polyethylene, polypropylene or another thermoplastic.

4. Method for making a filter device as claimed in any of the foregoing claims, which method includes:
a) manufacturing a filter housing (1, 10, 20, 30) comprising the steps of:
- providing an extruded tube,
- heating an end of the extruded tube,
- expanding the end (2, 11, 21, 31) of the tube, and
- arranging a bush (3, 12, 22, 32) in the expanded end (2, 11, 21, 31);
b) placing at least a filter element (8) in the filter housing (1, 10, 20, 30); and
c) providing locking means for enclosing the filter element (8) in the housing (1, 10, 20, 30), comprising the steps of:
- arranging a peripheral groove (23, 33) in the bush (3, 22, 32), or placing a bush (12) in said expanded end (11), wherein said bush has a length smaller than the length of said expanded part (11) such that a space is created between the wall of the expanded end (11) and said bush (12), said space forming a peripheral groove, and placing a locking ring (4, 13, 24) in said groove (23, 33), or
- arranging a helical groove in the bush (3, 12, 22, 32) for enclosing the filter element (8) by screwing.

5. Method as claimed in claim 4, wherein arranging of the bush takes place by glueing.

6. Method as claimed in claim 4 or 5, wherein after heating the end of the extruded tube an opening is formed in the heated wall.

7. Modular filter system comprising a number of filter devices as claimed in any of the foregoing claims 1-4, wherein the filter housings (1, 10, 20, 30) are provided with one expanded end (2, 11, 21, 31), thereby enabling mutual connection of a number of filter housings (1, 10, 20, 30), the bush being formed by the non-expanded end of the subsequent filter housing.

## Patentansprüche

1. Filtervorrichtung, umfassend:
a) ein Filtergehäuse (1, 10, 20, 30), das
- ein extrudiertes Rohr mit zumindest einem erweiterten Ende (2, 11, 21, 31), und
- eine im erweiterten Ende angeordnete Hülse (3, 12, 22, 32) aufweist;
b) zumindest ein in dem Filtergehäuse (1, 10, 20, 30) platziertes Filterelement (8); und
c) Arretierungsmittel zum Einschließen des Filterelementes (8) in das Gehäuse (1, 10, 20, 30), wobei diese Arretierungsmittel umfassen:
- eine in der Hülse (3, 22, 32) angeordnete Umfangsnut (23, 33) oder eine Umfangsnut, die durch den Abstand zwischen der Wand des erweiterten Endes (11) und eine in dieses erweiterte Ende (11) platzierte Hülse (12) gebildet wird, die eine kürzere Länge als die Länge dieses erweiterten Teils (11) hat und einen in diese Nut (23, 33) platzierten Klemmring (4, 13, 24), oder
- eine in der Hülse (3, 12, 22, 32) angeordnete schraubenförmige Nut zum Einschließen des Filterelementes (8) durch Schrauben.

2. Vorrichtung gemäß Anspruch 1, **dadurch gekennzeichnet, dass** die Innenwand der Hülse (3, 12, 22, 32) im wesentlichen in der Richtung der Innenwand des nicht verlängerten extrudierten Rohres liegt.

3. Vorrichtung gemäß einem der vorhergehenden Ansprüche, **dadurch gekennzeichnet, dass** das Rohr zumindest Polyvinylchlorid, Polyethylen, Polypropylen oder einen anderen Thermoplasten aufweist.

4. Verfahren zur Herstellung einer Filtervorrichtung gemäß einem der vorhergehenden Ansprüche, **dadurch gekennzeichnet, dass** das Verfahren umfasst:
a) Herstellen eines Filtergehäuses (1, 10, 20, 30), das die Schritte aufweist:
- Bereitstellen eines extrudierten Rohres,
- Erhitzen eines Endes des extrudierten Rohres,
- Erweitern des Endes (2, 11, 21, 31) des Rohres, und
- Anordnen einer Hülse (3, 12, 22, 32) in dem verlängerten Ende (2, 11, 21, 31);
b) Platzieren zumindest eines Filterelementes (8) in das Filtergehäuse (1, 10, 20, 30); und
c) Bereitstellen von Arretierungsmitteln zum Einschließen des Filterelementes (8) in dem Gehäuse (1,10, 20, 30), das die Schritte aufweist:
- Anordnen einer Umfangsnut (23, 33) in der Hülse (3, 22, 32), oder Platzieren einer Hülse (12) in dieses erweiterte Ende (11), wobei diese Hülse eine kürzere Länge als die Länge dieses erweiterten Teils (11) hat, so dass ein Abstand zwischen der Wand des erweiterten Endes (11) und dieser Hülse (12) gebildet wird, dieser Abstand eine Umfangsnut bildet und Platzieren eines Klemmringes (4, 13, 24) in diese Nut (23, 33), oder
- Anordnen einer schraubenförmigen Nut in der Hülse (3, 12, 22, 32) zum Einschließen des Filterelementes (8) durch Schrauben.

5. Verfahren gemäß Anspruch 4, **dadurch gekennzeichnet, dass** das Anordnen der Hülse durch Kleben erfolgt.

6. Verfahren gemäß Anspruch 4 oder 5, **dadurch gekennzeichnet, dass** nach Erhitzen des Endes des extrudierten Rohres eine Öffnung in der erhitzten Wand gebildet wird.

7. Modulares Filtersystem, das eine Anzahl von Filtervorrichtung gemäß einem der Ansprüche 1-4 aufweist, **dadurch gekennzeichnet, dass** die Filtergehäuse (1, 10, 20, 30) mit einem erweiterten Ende (2, 11, 21, 31) versehen sind, wodurch eine gegenseitige Verbindung einer Anzahl von Filtergehäusen (1, 10, 20, 30) ermöglicht wird, wobei das Rohr durch das nicht erweiterte Ende des folgenden Filtergehäuses gebildet wird.

## Revendications

1. Dispositif de filtre, comprenant :
a) un corps de filtre (1, 10, 20, 30) comprenant :
- un tube extrudé ayant au moins une extrémité élargie (2, 11, 21, 31), et
- un manchon (3, 12, 22, 32) disposé dans l'extrémité élargie (2, 11, 21, 31) ;
b) au moins un élément filtrant (8) placé dans le corps de filtre (1, 10, 20, 30) ; et
c) un moyen de verrouillage destiné à enfermer l'élément filtrant (8) dans le corps (1, 10, 20, 30), dans lequel lesdits moyens de verrouillage comprennent :
- une gorge périphérique (23, 33) ménagée dans le manchon (3, 22, 32), ou une gorge périphérique formée par l'espace créé entre la paroi de l'extrémité élargie (11) et un manchon (12) placé dans ladite extrémité élargie (11) et ayant une longueur inférieure à la longueur de ladite partie élargie (11), et une bague de verrouillage (4, 13, 24) placée dans ladite gorge (23, 33), ou
- une gorge hélicoïdale ménagée dans le manchon (3, 12, 22, 32) destiné à enfermer l'élément filtrant (8) par vissage.

2. Dispositif de filtre selon la revendication 1, dans lequel la paroi intérieure du manchon (3, 12, 22, 32) est sensiblement alignée avec la paroi intérieure non élargie du tube extrudé.

3. Dispositif de filtre selon une des revendications précédentes, dans lequel au moins le tube comprend du polychlorure de vinyle, du polyéthylène, du polypropylène ou une autre matière thermoplastique.

4. Procédé de fabrication d'un dispositif de filtre selon une quelconque des revendications précédentes, lequel procédé consiste :
a) à fabriquer un corps de filtre (1, 12, 20, 30) en comprenant les phases consistant à :
- préparer un tube extrudé,
- chauffer une extrémité du tube extrudé,
- élargir l'extrémité (2, 11, 21, 31) du tube, et
- disposer un manchon (3, 12, 22, 32) dans l'extrémité élargie (2, 11, 21, 31);
b) placer au moins un élément filtrant (8) dans le corps de filtre (1, 10, 20, 30) ; et
c) prévoir des moyens de verrouillage pour enfermer l'élément filtrant (8) dans le corps (1, 10, 20, 30), ceci comprenant les phases consistant à :
- ménager une gorge périphérique (23, 33) dans le manchon (3, 22, 32), ou placer un manchon (12) dans ladite extrémité élargie (11), ledit manchon ayant une longueur inférieure à la longueur de ladite partie élargie (11), de sorte qu'un espace est créé entre la paroi de l'extrémité élargie (11) et ledit manchon (12), ledit espace formant une gorge périphérique, et placer une bague de verrouillage (4, 13, 24) dans ladite gorge (23, 33) ou
- ménager une gorge hélicoïdale dans le manchon (3, 12, 22, 32) pour enfermer l'élément filtrant (8) par vissage.

5. Procédé selon la revendication 4, dans lequel l'opération de disposition du manchon s'effectue par collage.

6. Procédé selon la revendication 4 ou 5, dans lequel, après avoir chauffé l'extrémité du tube extrudé, on forme une ouverture dans la paroi chauffée.

7. Système de filtre modulaire, comprenant un certain nombre de dispositifs de filtres selon une quelconque des revendications précédentes 1- 4, dans lequel les corps de filtres (1, 10, 20, 30) sont munis d'une extrémité élargie (2, 11, 21, 31), en permettant par ce moyen d'assembler plusieurs corps de filtres (1, 10, 20, 30) entre eux, le manchon étant alors formé par l'extrémité non élargie du corps de filtre suivant.
